# EUROPEAN PATENT APPLICATION

(11) **EP 4 492 780 A1**
(43) Date of publication of application: **15.01.2025**
(21) Application number: 24187437.9
(22) Date of filing: 09.07.2024
(51) Int. Cl.: H04N 19/117, G06T 5/70, H04N 19/167, H04N 19/17, H04N 19/85

(54) **VIDEO DECODER GUIDED REGION AWARE FILM GRAIN SYNTHESIS**

(30) Priority: 14.07.2023 CN 202310869073; 24.07.2023 US 202318357951
(71) Applicant: Beijing YoJaJa Software Technology Development Co., Ltd., Beijing 100015 (CN)
(72) Inventor: Zhang, Wenhao, BEIJING, 100102 (CN); Meng, Xuewei, BEIJING, 100102 (CN)
(74) Representative: Müller-Boré & Partner Patentanwälte PartG mbB

(57) **Abstract**

In some embodiments, a method segments a frame of a video into a plurality of regions and classifies a region in the plurality of regions with a region type in a plurality of region types. Film grain synthesis information is generated for the region in the plurality of regions based on the region type that is associated with the region. The method outputs the film grain synthesis information for adding film grain to the region of the frame.

## Description

### CROSS REFERENCE TO RELATED APPLICATIONS

Pursuant to 35 U.S.C. §119(a), this application is entitled to and claims the benefit of the filing date of Chinese Application No. 202310869073.3 filed July 14, 2023 in China, entitled "VIDEO DECODER GUIDED REGION AWARE FILM GRAIN SYNTHESIS", the content of which is incorporated herein by reference in its entirety for all purposes.

### BACKGROUND

Film grain may be one of the distinguishing characteristics of videos that are produced, such as in videos captured by traditional film cameras (e.g., shows or movies produced by the movie industry). Film grain may be a perceptually pleasing noise that could be illustrated with artistic intention. However, including film grain in videos that are streamed over a network to client devices may pose technical challenges, such as the bitrate required to encode videos that include film grain may be high. This results in a high bandwidth requirement that may not be compatible with streaming environments. To save bandwidth, film grain may be removed from the videos before streaming the videos to client devices. However, viewers may not be satisfied with the visual quality of the videos without the film grain included.

One technique may be to synthesize film grain at the client device to add the film grain back on top of decoded video frames, which mimics the film grain in the source video. This process may introduce film grain back into the video. However, the film grain synthesis may be a challenging task to recover an accurate replica of the original film grain in the source video. Further, the film grain synthesis may also add undesirable effects to the video frames, such as new visual artifacts.

### BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations. The patent or application file contains at least one drawing executed in color. Copies of this patent or patent application publication with color drawing(s) will be provided by the Office upon request and payment of the necessary fee.
FIG. 1 depicts a simplified system for generating film grain for a video according to some embodiments.
FIG. 2 depicts a more detailed example of the film grain synthesis according to some embodiments.
FIG. 3 depicts a simplified flowchart of a method for performing film grain synthesis according to some embodiments.
FIG. 4 depicts an example of different regions and region types in a frame according to some embodiments.
FIG. 5 depicts a simplified flowchart of processing regions of a frame according to some embodiments.
FIG. 6 depicts a video streaming system in communication with multiple client devices via one or more communication networks according to one embodiment.
FIG. 7 depicts a diagrammatic view of an apparatus for viewing video content and advertisements.

### DETAILED DESCRIPTION

Described herein are techniques for a video analysis system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

In some embodiments, a system may perform a film grain synthesis that leverages decoding features to guide the synthesis of film grain for decoded video frames of a video. The decoding features may be used to segment a video frame into regions that may have different sensitivities to film grain. The regions may be classified as different region types based on the decoder information. In some embodiments, some region types may be a region of human eye interest, a region of human eye non-interest, a region of film grain visible, a region of film grain invisible, a region prone to artifacts, etc. Then, the system may tune the film grain synthesis model that is applied to generate film grain for the different regions. For example, based on the type of region that is determined, different film grain synthesis processes may be used. For example, the parameter settings used in the film grain synthesis may be tuned based on the region type or region types that are associated with a region.

Accordingly, the film grain that is synthesized for a decoded video frame may be improved. For example, if video frame includes different region types, then using a single model with the same parameter settings may not optimally synthesize film grain for all the regions. Thus, segmenting the video frame into regions and tuning the film grain synthesis for the different region types improves the film grain that is generated for the video frame. For example, the different regions may have different sensitivities to film grain synthesis based on respective region types. Using the region type based optimization to generate film grain achieves a better film grain reconstruction for the video frame that may be more similar to the original film grain that was removed from the source video. Also, even if film grain is not present in the source video (e.g., digital cameras may not produce film grain in videos), it may be desirable to add film grain to the videos, such as for creative intent or because it is aesthetically pleasing to viewers.

### System

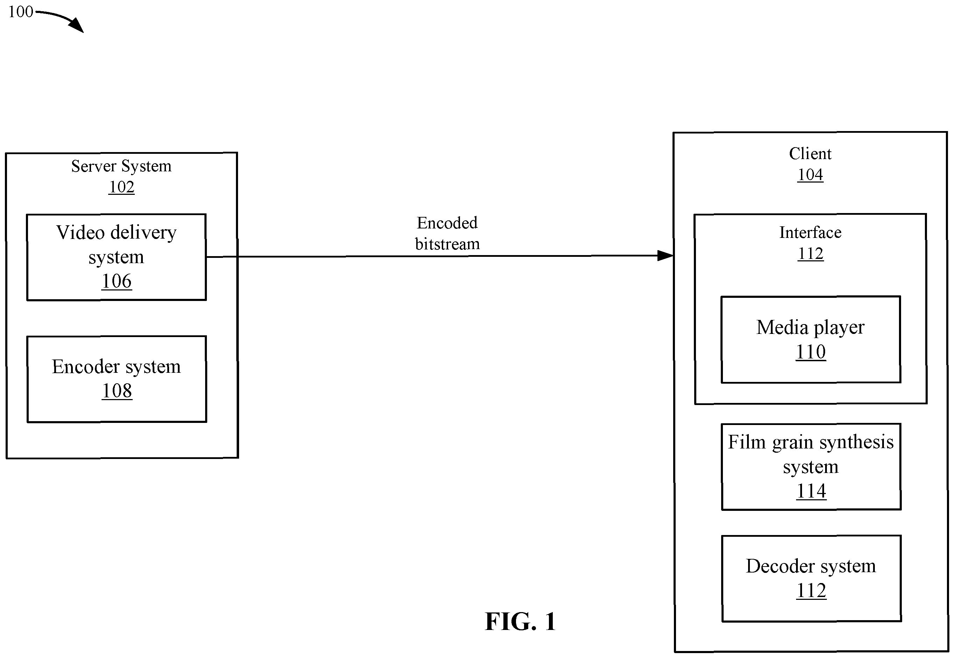

FIG. 1 depicts a simplified system 100 for generating film grain for a video according to some embodiments. System 100 includes a server system 102 that provides a service to deliver videos to a client device 104. Although the discussion may use server system 102 and client 104 to generate film grain, the process described may be used in different ways. For example, film grain synthesis may be performed solely on server system 102, solely on client 104, or distributed in different ways on different devices.

A content provider may operate video delivery system 106 to provide a content delivery service that allows entities to request and receive media content. The content provider may use video delivery system 106 to coordinate the distribution of media content to clients 104. The media content may be different types of content, such as on-demand videos from a library of videos and live videos. In some embodiments, live videos may be where a video is available based on the linear schedule. Videos may also be offered on-demand. On-demand videos may be content that can be requested at any time and not limited to viewing on a linear schedule. The videos may be programs, such as movies, shows, advertisements, etc. Server system 102 may receive a source video that may include different types of content, such as video, audio, or other types of content information. The source video may be transcoded (e.g., encoded) to create an encoded version of the source video, which may be delivered as an encoded bitstream to client 104. Although the delivery of videos is shown from video delivery system 106 to client 104, video delivery system 106 may use a content delivery network (not shown) to deliver videos to client 104.

An encoder system 108 may encode a source video into the encoded bitstream. Different types of encoders may be used, such as encoders that use different coding specifications. In some embodiments, the source video may have film grain, but that film grain may be removed from the source video and not included in the encoded video frames of the encoded bitstream. In other embodiments, the source video may not have film grain included, but it may be desirable to add film grain to the decoded video frames.

Client 104 may include different computing devices, such as smartphones, living room devices, televisions, set top boxes, tablet devices, etc. Client 104 includes an interface 112 and a media player 110 to play content, such as a video. At client 104, decoder system 112 receives the encoded bitstream, and decodes the encoded bitstream into decoded video frames using a decoder system 112.

Film grain may be present in some videos, such as in shows and movies that are shot with traditional film cameras. Film grain may be a visible texture or pattern that appears in video shot on film. The film grain may appear as noise in the videos. As discussed above, the film grain may be removed from the source video before encoding, and the encoded bitstream may not include the film grain from the source video when sent from server system 102 to client device 104. Preserving the film grain from the source video in the encoded bitstream may be challenging for multiple reasons. For example, when film grain is present in the original source video, the bitrate of the encoded bitstream may be increased. Also, the random nature of film grain in source videos may cause the bitrate to randomly change as the bitrate increases for frames when film grain is encountered, which may affect the delivery of the encoded bitstream to client device 104. The random nature may affect the playback experience as the bitrate changes during the playback, which may cause re-buffering. Further, the random nature of the film grain in the video makes it difficult to predict when (e.g., which frames) and where (e.g., where in a frame) the film grain will occur in the source video using prediction schemes in video coding specifications. This may cause the compression to be inefficient. As discussed above, digital cameras may not produce film grain in videos or frames of the source video may not include film grain, but the system may still add film grain to the videos.

In light of the above, the encoded bitstream may not include the film grain from the source video; however, a film grain synthesis system 114 may synthesize film grain that can be added to the decoded video frames. However, traditional film grain synthesis may encounter problems. Typically, parameters for a film grain model may be used to describe the film grain that should be added to a decoded video. Although the models may add film grain to decoded video frames, the reconstructed film grain may not be desirable, such as the film grain may be far different from the original artistic intention in the original source video or may also introduce visual artifacts that were not included in the source video. The problems may occur because the film grain generation varies based on the video content. For example, the characteristics of the film grain may be different for different regions in a single frame because of different lighting, different color channels, different texture complexity, etc. Also, the human visual perception of film grain differs on different content. For example, the film grain on flat regions, such as a background wall, a sky with clouds or bokeh areas (e.g., out of focus areas) may be more visible to the human eye compared to the same amount of film grain that is found on complex regions, such as trees and grasses. Further, the human eye may be more sensitive to content with slow and smooth motion whereas the film grain in a high motion area may be hidden. A frame may include multiple variations of the above problems. Accordingly, using the same parameters in a single model to synthesize film grain for the frame may not be able to optimally generate film grain for a decoded video frame. The following will describe an improvement in the film grain synthesis based on classifying regions of a frame into region types, and then applying targeted film grain synthesis to the regions.

### Film Grain Synthesis

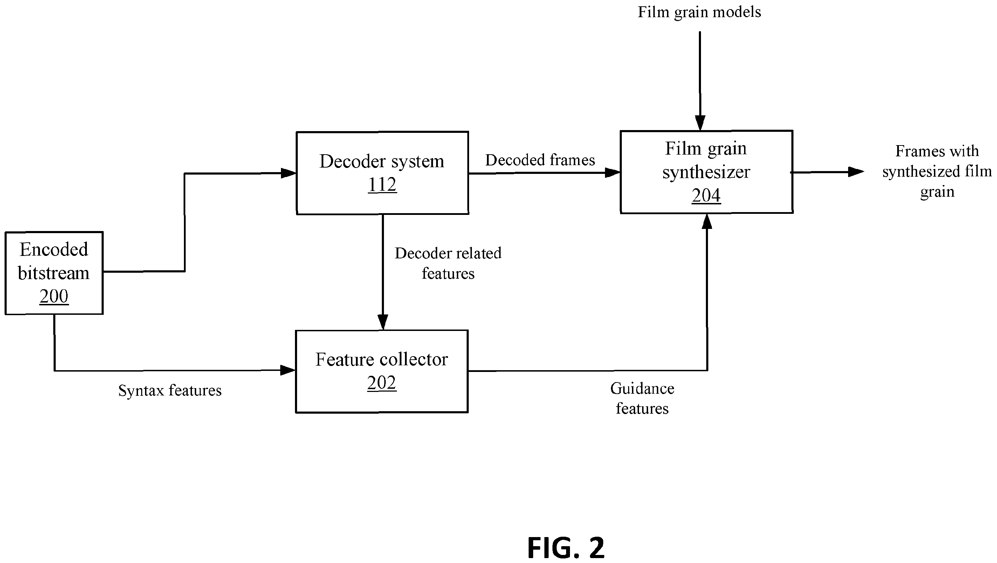

FIG. 2 depicts a more detailed example of the film grain synthesis according to some embodiments. Encoded bitstream 200 is received at decoder system 112, which can decode the encoded bitstream 200 into decoded frames. Different decoders may be used in the process, such as different decoders using different coding specifications. The film grain synthesis may be agnostic of different encoder/decoders because the decoding information that may be used for film grain synthesis may be found in decoders using different coding specifications.

Film grain synthesis system 114 may include a feature collector 202 and a film grain synthesizer 204. Feature collector 202 may collect features from the decoding process, such as syntax features from encoded bitstream 200 and/or decoder related features from decoder system 112. The syntax features and decoder related features may be referred to as decoding features generally. Syntax features may be information that refers to encoded bitstream 200, such as the information that may be needed to perform decoding of encoded bitstream 200. Examples of syntax features include quantization parameters, frame type (I/B/P frames), motion vectors, etc. Syntax features may be sent in encoded bitstream 200 or via a separate control channel. Decoder related features may be features that may be determined based on the decoding of encoded bitstream 200 by decoder system 112. Examples of decoder related features include block partition results, distribution of quantization residue (e.g., distribution of an error between the original frame and the quantized version of the frame), etc. Although the specific features are described as being part of syntax features or decoder related features, the same features may be found in syntax features and decoder related features, such as quantization parameters, frame type, etc. Feature collector 202 may provide the decoding features as guidance features to film grain synthesizer 204.

Film grain synthesizer 204 receives the decoded frames and guidance features from feature collector 202. Film grain synthesizer 204 then uses using the guidance features to generate film grain parameters for one or more film grain models. The models are used to generate the synthesized film grain for the frames based on the film grain parameters.

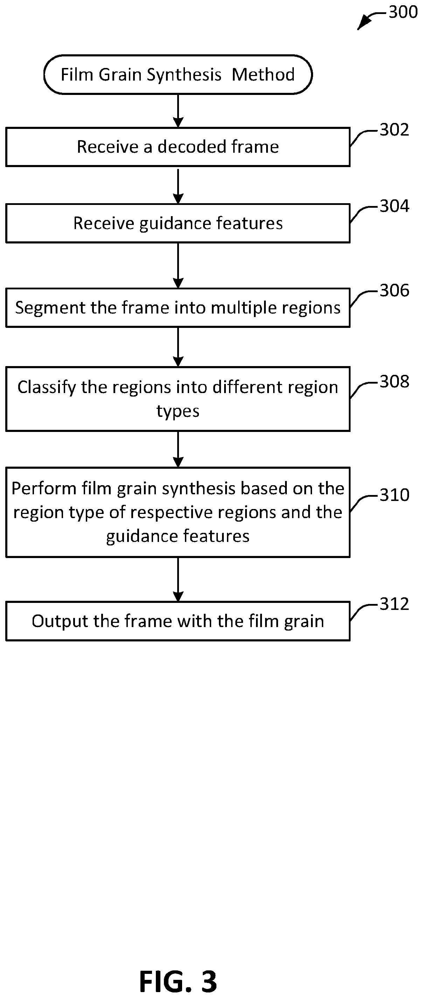

FIG. 3 depicts a simplified flowchart 300 of a method for performing film grain synthesis according to some embodiments. At 302, film grain synthesizer 204 receives a decoded frame. The following process may be performed to synthesize film grain for a single decoded frame or multiple decoded frames together. Also, at 304, film grain synthesizer 204 receives guidance features from feature collector 202.

At 306, film grain synthesizer 204 segments the frame into multiple regions. The segmenting of the frame into multiple regions may be performed using different methods. For example, computer vision based methods and/or video coding related methods may be used. Computer vision based methods may use machine learning or other methods to analyze the content of the frame to segment the frame into different regions. Examples of computer vision methods may use edge detection to determine regions. In some examples, content of a sky may be segmented into one region and content of a person may be segmented into another region based on the detection of edges in the video. Video coding related methods may use the guidance features to segment the frame into regions. For example, block partitioning results may be used to determine regions. In the video coding process, blocks of a frame may be split into different numbers of smaller blocks depending on the respective content that is included in the blocks. The splitting of blocks may be used to determine regions, such as flat regions may correspond to a region of larger blocks, and texture or detailed regions may correspond to a region of smaller blocks.

At 308, film grain synthesizer 204 classifies the regions into different region types. The guidance features may be used to classify the regions into different region types. The classification of the region into different region types may be performed using different methods. For example, computer vision based methods and/or video coding related methods may be used. The computer vision based methods may analyze the content in the region to determine the region type. The video coding related methods may use information from video coding. Either method may also use guidance features. The use of guidance features may improve the classification because these guidance features may be based on the decoding of the frame and provide insight into the characteristics of the frame that may not be provided using computer vision solely. In some embodiments, a region of human eye interest may be labeled based on the motion vector associated with the region, such as regions with motion vectors indicating high motion can be labeled as regions of human eye interest. Regions of film grain visible may be labeled based on the light of the region, the texture complexity of the region, or other characteristics of content that is detected in the region (e.g., grass or a wall). For example, film grain may be more visible for mid to light regions, and not for dark regions; and/or flat regions, and not visible in complex regions. Regions prone to artifacts may be labeled based on the light of the region, the texture complexity of the region, the content detected (e.g., a wall), etc. For example, flat regions (e.g., a wall) may also be more susceptible to having artifacts appear.

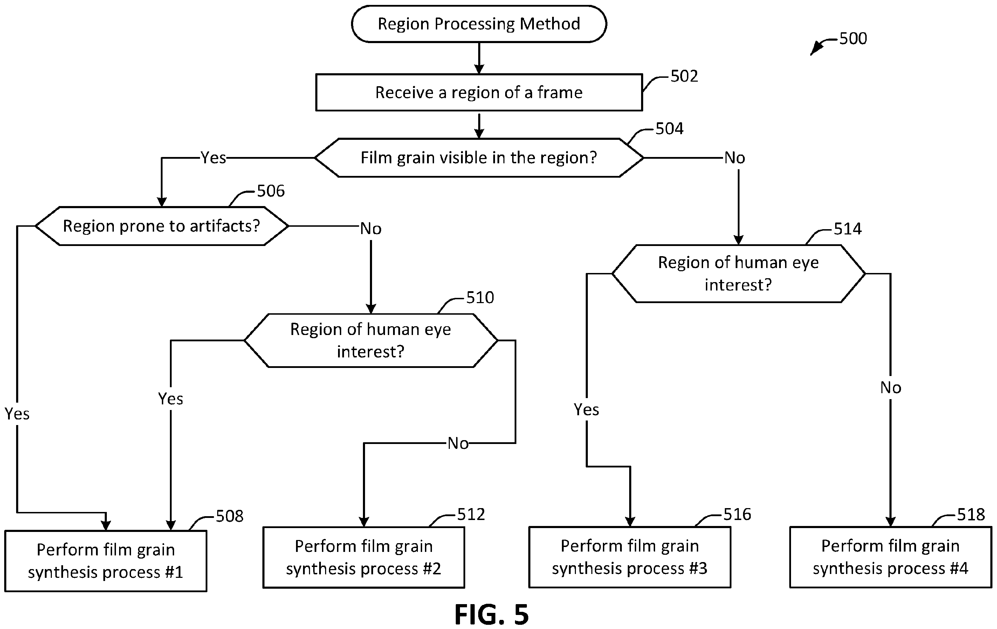

At 310, film grain synthesizer 204 performs film grain synthesis based on the region type of respective regions and the guidance features. Each region type may be processed using a respective film grain synthesis process that may optimize the film grain synthesis for the region type. The different film grain synthesis processes are described in more detail in FIG. 5.

At 312, film grain synthesizer 204 outputs the frame with the synthesized film grain. In some embodiments, film grain synthesizer 204 may output film grain parameters that can be used to generate the film grain that can be added to the frame. The parameters may be input into a film grain synthesis model that outputs the film grain to be added to the video frame. In other embodiments, film grain synthesizer 204 may generate the synthesized film grain. For example, the actual film grain is generated and added to the frame.

The following will now describe the region types and then the film grain synthesis in more detail.

### Regions

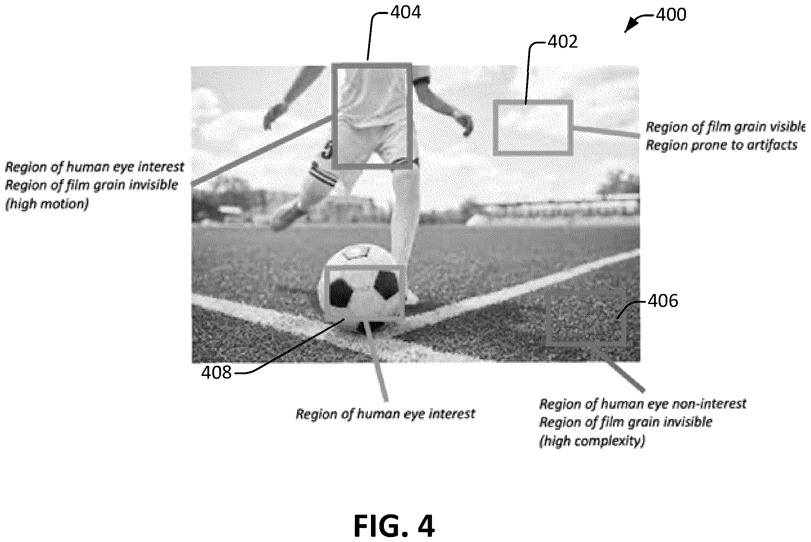

FIG. 4 depicts an example of different regions and region types in a frame according to some embodiments. Although these regions are shown as being detected in frame 400, other regions may be detected. Also, although these region types are described as being assigned to the region, other region types may be determined.

In frame 400, regions 402, 404, 406 and 408 are detected. As shown, these regions include different content. For example, region 402 includes content including a blue sky and white clouds, region 404 includes content for a soccer player wearing a white uniform, region 406 includes content for green grass or fake green grass, and region 408 includes content including a portion of a black and white soccer ball.

Different region types may be assigned to the regions shown. In some embodiments, a single region type or multiple region types may be assigned to one region. The following region types may be used of region types may be a region of human eye interest, a region of human eye non-interest, a region of film grain visible, a region of film grain invisible, a region prone to artifacts, but other region types may be appreciated. The region of human eye interest may be a region that may attract human eye interest whereas the region of human eye non-interest may be a region that may not attract human eye interest. The region of film grain visible may be a region in which it may be more likely a viewer may notice film grain whereas the region of film grain invisible may be a region in which it may be more likely a viewer may not notice film grain. The region of film grain invisible may actually include film grain, but it may not be as noticeable as film grain in a region of film grain visible. The region prone to artifacts may be where it is more probable that artifacts may result when film grain is added to the frame.

In frame 400, region 402 may be assigned the region types of "region of film grain visible" and a "region prone to artifacts". Region 402 is assigned its region types because film grain on flat regions, such as a sky with clouds, may be more visible to the human eye. Also, flat regions may also be more susceptible to artifacts. Region 404 is assigned the region types of "region of human eye interest" and "region of film grain invisible". Region 404 is assigned its region types because the motion of the soccer player may attract human eye interest. The high motion may also cause film grain to be less visible or invisible to the human eye. Region 406 is assigned the region types of "region of human eye non-interest" and "region of film grain invisible". Region 406 is assigned its region types because the area of grass may not be the focus of a viewer and the high complexity of the grass may be less susceptible to being able to perceive visible film grain. Region 408 is assigned a region type of "region of human eye interest". Region 408 is classified with this region type because the soccer ball is associated with the focus of the content of the frame and motion.

Film grain synthesizer 204 may segment frame 400 into regions and label the regions with region types. To determine the following region types for the region, the analysis described in 308 of FIG. 3 may be performed where analysis of guidance features is used. In different embodiments, film grain synthesizer 204 may use different processes, such as a rules-based process or a model to determine region types. The rules based process may compare guidance features to threshold to determine region types. The model may receive guidance features as input and output a region type or types.

In some examples, to label a region of film grain visible or invisible, film grain synthesizer 204 may use block partition results, which may help to detect where film grain is visible where regions with large blocks usually correspond to flat areas and may have film grain visible. Film grain synthesizer 204 may compare the size of blocks to a threshold to determine when large blocks are encountered. Also, film grain synthesizer 204 may input the block partition results into a model to determine whether film grain is visible. Using block partition results may help to detect where film grain is invisible. Regions with more small blocks may have more details, edges, and textures, and be complex where film grain may be harder to detect by a viewer. Regions with large blocks may correspond to flat areas where film grain may be visible. Also, motion vectors with high motion may indicate film grain may not be visible while motion vectors for slow and smooth motion may indicate film grain may be visible. Blocks with large motion vectors may be regarded as high speed moving objects and human eyes may not be sensitive to film grain in high speed moving regions due to the persistence of vision. Film grain synthesizer 204 may compare the motion vectors to a threshold to determine when high motion or low motion is encountered. Also, film grain synthesizer 204 may input the motion vectors into a model to determine whether film grain is visible.

For a region of human eye interest and a region of human eye non-interest, using guidance features may help to detect where human eye interest may occur. For example, regions with large blocks may correspond to flat areas, which may not be of interest. Also, regions with motion vectors of high motion may be of interest. Film grain synthesizer 204 may compare the size of blocks or motion vectors to a threshold to determine when large blocks are encountered. Also, film grain synthesizer 204 may input the block partition results or motion vectors into a model to determine whether the region is of human eye interest.

For the region prone to artifacts, artifacts may also be introduced when the bitrate used to encode the video is low or the region is prone to artifacts based on the light of the region being brighter, the texture complexity of the region being not complex, etc. The distribution of quantization residue may also be used to detect whether the region is prone to artifacts where the quantization residue with less high frequency coefficients may be more likely to be in a flat region and the quantization residue with more high frequency coefficients may be more likely to be in a non-flat region in which film grain may be less visible and less prone to artifacts. Film grain synthesizer 204 may compare the above features to a threshold or thresholds to determine when large blocks are encountered. Also, film grain synthesizer 204 may input the features results into a model to determine whether artifacts may be introduced.

Based on the above, film grain synthesizer 204 may label regions with region types, Then, after labeling the regions with region types, film grain synthesizer 204 may synthesize film grain for the regions.

### Film Grain Synthesis for Regions

FIG. 5 depicts a simplified flowchart 500 of processing regions of a frame according to some embodiments. As discussed above, film grain synthesizer 204 may process regions of a frame based on its region type. Different film grain synthesis processes may be performed in film grain synthesis depending on the region type. The different processes may use different parameters and/or different film grain synthesis models.

Film grain may be synthesized based on different parameters. For example, the parameters of film grain size, film grain density, and film grain pattern may be used to synthesize the film grain using a model. Film grain size may be based on the size of the film grain found in the frame. The size may be measured based on the pixels that include the film grain.

Film grain density may be based on the amount of film grain found in an area. For example, the numbers of pixels within a region that include film grain and the numbers of pixels that do not include film grain may affect the density.

Film grain pattern may be based on a pattern of characteristics of the film grain. In some embodiments, the intensities of pixels associated with different film grain may form film grain patterns. For example, one film grain pattern may include the intensity of 10 for five pixels of the pattern, another film grain pattern may include the intensity of 240 for all five pixels of the pattern, and another film grain pattern may include different intensities of 23, 50, 45, and 12 for the five pixels of the pattern. Another film grain pattern may also include different intensities, but are higher intensities, such as 123, 211, 213, 200, and 234. The values may form the pattern. The model uses the above parameters to synthesize the film grain. The model may also use other parameters that can be determined.

The following process may be performed for each region of the frame. At 502, film grain synthesizer 204 receives a region of a frame. Then, film grain synthesizer 204 may process the region types that may be associated with the region. The region may have been labeled with region types as described above.

At 504, film grain synthesizer 204 determines if film grain is visible in the region. If film grain is visible in the region, at 506, film grain synthesizer 204 determines if the region is prone to artifacts. For example, flat regions, such as a sky with clouds, may be more visible to the human eye and prone to artifacts. As discussed above, the film grain may be more visible in flat regions. If the region is prone to artifacts, at 508, film grain synthesizer 204 may perform a film grain synthesis process #1.

Film grain synthesis process #1 may fine-tune the film grain parameters using a more complex process, such as using machine learning methods to fine-tune the film grain parameters. For example, for regions where the film grain is visible and/or the regions are prone to artifacts, the film grain size, density, and pattern should be fine-tuned carefully to ensure that film grain randomness is found in the spatial domain. The generation of film grain may be important in terms of quality because film grain is visible in the region and also artifacts may be more prone to appear. The randomness of the film grain can vary in intensity depending on the factors such as the film stock use, film sensitivity, and the amount of light in the region. The randomness adds a subtle noise-like pattern to the image, which can enhance details, reduce the perception of banding, and create a more film-like look. Also, regions with film grain visible and being prone to artifacts may require consistency in the temporal domain. That is, the smoothness of the film grain is consistent temporarily temporally across multiple frames to make the film grain more stable as it is being viewed.

The use of machine learning to generate the parameters and/or synthesize the film grain may optimally generate the film grain for this region. The machine learning input may include the film grain parameters derived from the bitstream, film grain parameters from co-located regions in the reference frames of the current frame, the light of the region, the texture complexity of the region, the content of the region, etc. The output of the machine learning model may be fine-tuned film grain parameters. Also, film grain synthesis process #1 may synthesize the film grain using the parameters. The input may include the content of the region, the film grain parameters, film grain parameters of co-located regions in the reference frames, etc. The output may be the synthesized film grain. The machine learning models may improve the film grain that is generated because improved parameters or the film grain is generated for the region type. An example of film grain parameters for synthesis process #1 is shown in Table I:

**Table I**

| Parameter | Value example (range) | | | | Description |
|---|---|---|---|---|---|
| Film_grain_size | 3 (3~9) | | | | Define the size of film grain. |
| Film_grain_density | 10 (1~10) | | | | Define the density of film grain. |
| Fllm_grain_pattern | | 0 | 12 | -1 | Define the pattern of film grain. (As the film grain size is 3, the film grain pattern is a 3x3 matrix.) |
| | | 3 | 102 | 3 | |
| | | 2 | 65 | 4 | |

Other methods of deriving the parameter values may also be appreciated.

The machine learning process may use the guidance features such as the quantization parameters, motion vectors, block partitioning results, etc., to fine-tune the parameters to generate the film grain. In one example of using the guidance features, there may be different levels of quantization parameters, such as frame level quantization parameters, coding tree unit level quantization parameters, coding unit level quantization parameters, etc. The different levels of quantization parameters may allow more details to be kept in the reconstructed decoded video frames, and fewer compression artifacts may occur in the compressed video. When the quantization parameters are lower, which means that the bitrate is very low, the film grain density size may be enlarged to better hide the encoding artifacts and improve the subjective quality.

If the region is not prone to artifacts, at 510, film grain synthesizer 204 determines if the region is of human eye interest. The region is of human eye interest, at 508, film grain synthesizer 204 again performs film grain synthesis process #1. Process #1 may be used because a region of human eye interest may be more likely to be focused on by a viewer, and thus film grain should be generated using more complex methods.

If the region is not of human eye interest, at 512, film grain synthesizer 204 performs a film grain synthesis process #2. Film grain synthesis process #2 may tune the film grain parameters using a less complex process compared to film grain synthesis process #1, such as using rules and not machine learning. Because the region is not of human eye interest, the film grain parameters may be generated to optimally produce the film grain. For example, the film grain parameters may be fine-tuned using spatial and temporal information, such as quantization parameters, block partitioning results, motion vectors, etc. This may generate optimal film grain parameters. However, because a viewer may not be focusing on this area, high complexity film grain synthesis methods, such as machine learning may not be used (e.g., film grain synthesis process #1). Using the quantization parameter example, when the quantization parameters are lower than a threshold, which means that the bitrate is very low, the film grain density and size may be enlarged to better hide the encoding artifacts and improve the subjective quality. When the quantization parameters are not lower than the threshold, the film grain density may not be changed or may be decreased based on the given film grain density.

If film grain is not visible in the region, 514, film grain synthesizer 204 determines if the region is of human eye interest. If this is a region of human eye interest, at 516, film grain synthesizer 204 performs a film grain synthesis process #3. Although the region is classified as film grain may not be visible in the region, which may mean film grain may be difficult to be observed in these regions, the region is of human eye interest so film grain may be difficult to observe, but may be visible when there are lightness changes in the video. Accordingly, film grain synthesis process #3 may use rules to tune film grain parameters . In some embodiments, film grain synthesis process #3 may ensure that the temporal consistency of the film grain is maintained across multiple frames. A motion vector may help to find co-located blocks in the neighboring frames, and the film grain parameters may be refined based on the co-located blocks. Film grain synthesizer 204 may generate film grain parameters based on neighboring frames to make the film grain temporally consistent.

If the region is not of a human eye interest, at 518, film grain synthesizer 204 may perform a film grain synthesis process #4, which may not use film grain synthesis. That is, process #4 does not add film grain to this region. This is because film grain may not be visible in the region and also it is not a region in which a viewer may focus on. Using process #4 may save computing resources that are used because film grain is not generated for this region. This may improve the conventional film grain synthesis process that generated film grain for the entire frame.

### Conclusion

A frame may include different characteristics in different regions. Accordingly, a single model to generate film grain in the frame may not be optimal. Accordingly, film grain may be synthesized in an improved manner by analyzing regions of a frame to classify the regions in different region types. Then, the regions may be processed using different film grain synthesis processes that may be optimal for the region type. Optimized film grain parameters may be generated to describe the film grain that should be added to the decoded frame. As different parameter values are input into the model, the film grain that is output may be optimal for the respective region.

### System

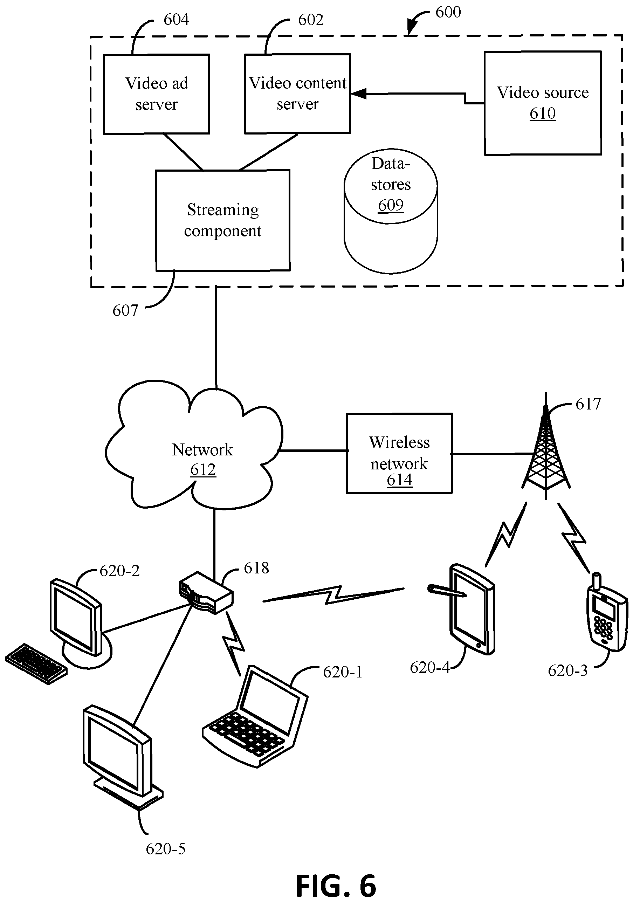

Features and aspects as disclosed herein may be implemented in conjunction with a video streaming system 600 in communication with multiple client devices via one or more communication networks as shown in FIG. 6. Aspects of the video streaming system 600 are described merely to provide an example of an application for enabling distribution and delivery of content prepared according to the present disclosure. It should be appreciated that the present technology is not limited to streaming video applications and may be adapted for other applications and delivery mechanisms.

In one embodiment, a media program provider may include a library of media programs. For example, the media programs may be aggregated and provided through a site (e.g., website), application, or browser. A user can access the media program provider's site or application and request media programs. The user may be limited to requesting only media programs offered by the media program provider.

In system 600, video data may be obtained from one or more sources for example, from a video source 610, for use as input to a video content server 602. The input video data may comprise raw or edited frame-based video data in any suitable digital format, for example, Moving Pictures Experts Group (MPEG)-1, MPEG-2, MPEG-4, VC-1, H.264 / Advanced Video Coding (AVC), High Efficiency Video Coding (HEVC), or other format. In an alternative, a video may be provided in a non-digital format and converted to digital format using a scanner or transcoder. The input video data may comprise video clips or programs of various types, for example, television episodes, motion pictures, and other content produced as primary content of interest to consumers. The video data may also include audio or only audio may be used.

The video streaming system 600 may include one or more computer servers or modules 602, 604, and 607 distributed over one or more computers. Each server 602, 604, 607 may include, or may be operatively coupled to, one or more data stores 609, for example databases, indexes, files, or other data structures. A video content server 602 may access a data store (not shown) of various video segments. The video content server 602 may serve the video segments as directed by a user interface controller communicating with a client device. As used herein, a video segment refers to a definite portion of frame-based video data, such as may be used in a streaming video session to view a television episode, motion picture, recorded live performance, or other video content.

In some embodiments, a video advertising server 604 may access a data store of relatively short videos (e.g., 10 second, 30 second, or 60 second video advertisements) configured as advertising for a particular advertiser or message. The advertising may be provided for an advertiser in exchange for payment of some kind or may comprise a promotional message for the system 600, a public service message, or some other information. The video advertising server 604 may serve the video advertising segments as directed by a user interface controller (not shown).

The video streaming system 600 may further include an integration and streaming component 607 that integrates video content and video advertising into a streaming video segment. For example, streaming component 607 may be a content server or streaming media server. A controller (not shown) may determine the selection or configuration of advertising in the streaming video based on any suitable algorithm or process. The video streaming system 600 may include other modules or units not depicted in FIG. 6, for example, administrative servers, commerce servers, network infrastructure, advertising selection engines, and so forth.

The video streaming system 600 may connect to a data communication network 612. A data communication network 612 may comprise a local area network (LAN), a wide area network (WAN), for example, the Internet, a telephone network, a wireless network 614 (e.g., a wireless cellular telecommunications network (WCS)), or some combination of these or similar networks.

One or more client devices 620 may be in communication with the video streaming system 600, via the data communication network 612, wireless network 614, or another network. Such client devices may include, for example, one or more laptop computers 620-1, desktop computers 620-2, "smart" mobile phones 620-3, tablet devices 620-4, network-enabled televisions 620-5, or combinations thereof, via a router 618 for a LAN, via a base station 617 for wireless network 614, or via some other connection. In operation, such client devices 620 may send and receive data or instructions to the system 600, in response to user input received from user input devices or other input. In response, the system 600 may serve video segments and metadata from the data store 609 responsive to selection of media programs to the client devices 620. Client devices 620 may output the video content from the streaming video segment in a media player using a display screen, projector, or other video output device, and receive user input for interacting with the video content.

Distribution of audio-video data may be implemented from streaming component 607 to remote client devices over computer networks, telecommunications networks, and combinations of such networks, using various methods, for example streaming. In streaming, a content server streams audio-video data continuously to a media player component operating at least partly on the client device, which may play the audio-video data concurrently with receiving the streaming data from the server. Although streaming is discussed, other methods of delivery may be used. The media player component may initiate play of the video data immediately after receiving an initial portion of the data from the content provider. Traditional streaming techniques use a single provider delivering a stream of data to a set of end users. High bandwidth and processing power may be required to deliver a single stream to a large audience, and the required bandwidth of the provider may increase as the number of end users increases.

Streaming media can be delivered on-demand or live. Streaming enables immediate playback at any point within the file. End-users may skip through the media file to start playback or change playback to any point in the media file. Hence, the end-user does not need to wait for the file to progressively download. Typically, streaming media is delivered from a few dedicated servers having high bandwidth capabilities via a specialized device that accepts requests for video files, and with information about the format, bandwidth, and structure of those files, delivers just the amount of data necessary to play the video, at the rate needed to play it. Streaming media servers may also account for the transmission bandwidth and capabilities of the media player on the destination client. Streaming component 607 may communicate with client device 620 using control messages and data messages to adjust to changing network conditions as the video is played. These control messages can include commands for enabling control functions such as fast forward, fast reverse, pausing, or seeking to a particular part of the file at the client.

Since streaming component 607 transmits video data only as needed and at the rate that is needed, precise control over the number of streams served can be maintained. The viewer will not be able to view high data rate videos over a lower data rate transmission medium. However, streaming media servers (1) provide users random access to the video file, (2) allow monitoring of who is viewing what video programs and how long they are watched (3) use transmission bandwidth more efficiently, since only the amount of data required to support the viewing experience is transmitted, and (4) the video file is not stored in the viewer's computer, but discarded by the media player, thus allowing more control over the content.

Streaming component 607 may use TCP-based protocols, such as HyperText Transfer Protocol (HTTP) and Real Time Messaging Protocol (RTMP). Streaming component 607 can also deliver live webcasts and can multicast, which allows more than one client to tune into a single stream, thus saving bandwidth. Streaming media players may not rely on buffering the whole video to provide random access to any point in the media program. Instead, this is accomplished using control messages transmitted from the media player to the streaming media server. Other protocols used for streaming are HTTP live streaming (HLS) or Dynamic Adaptive Streaming over HTTP (DASH). The HLS and DASH protocols deliver video over HTTP via a playlist of small segments that are made available in a variety of bitrates typically from one or more content delivery networks (CDNs). This allows a media player to switch both bitrates and content sources on a segment-by-segment basis. The switching helps compensate for network bandwidth variances and infrastructure failures that may occur during playback of the video.

The delivery of video content by streaming may be accomplished under a variety of models. In one model, the user pays for the viewing of video programs, for example, paying a fee for access to the library of media programs or a portion of restricted media programs, or using a pay-per-view service. In another model widely adopted by broadcast television shortly after its inception, sponsors pay for the presentation of the media program in exchange for the right to present advertisements during or adjacent to the presentation of the program. In some models, advertisements are inserted at predetermined times in a video program, which times may be referred to as "ad slots" or "ad breaks." With streaming video, the media player may be configured so that the client device cannot play the video without also playing predetermined advertisements during the designated ad slots.

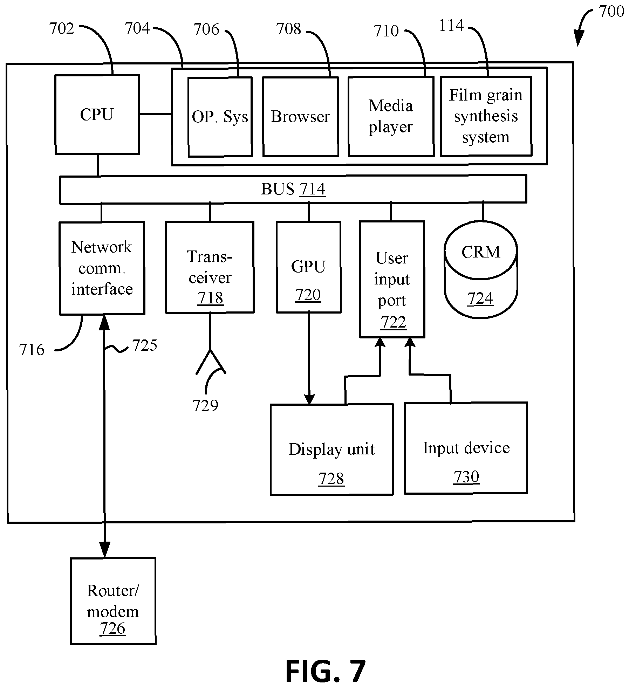

Referring to FIG. 7, a diagrammatic view of an apparatus 700 for viewing video content and advertisements is illustrated. In selected embodiments, the apparatus 700 may include a processor (CPU) 702 operatively coupled to a processor memory 704, which holds binary-coded functional modules for execution by the processor 702. Such functional modules may include an operating system 706 for handling system functions such as input/output and memory access, a browser 708 to display web pages, and media player 710 for playing video. The modules may further include film grain synthesis system 114. The memory 704 may hold additional modules not shown in FIG. 7, for example modules for performing other operations described elsewhere herein.

A bus 714 or other communication component may support communication of information within the apparatus 700. The processor 702 may be a specialized or dedicated microprocessor configured or operable to perform particular tasks in accordance with the features and aspects disclosed herein by executing machine-readable software code defining the particular tasks. Processor memory 704 (e.g., random access memory (RAM) or other dynamic storage device) may be connected to the bus 714 or directly to the processor 702, and store information and instructions to be executed by a processor 702. The memory 704 may also store temporary variables or other intermediate information during execution of such instructions.

A computer-readable medium in a storage device 724 may be connected to the bus 714 and store static information and instructions for the processor 702; for example, the storage device (CRM) 724 may store the modules for operating system 706, browser 708, and media player 710 when the apparatus 700 is powered off, from which the modules may be loaded into the processor memory 704 when the apparatus 700 is powered up. The storage device 724 may include a non-transitory computer-readable storage medium holding information, instructions, or some combination thereof, for example instructions that when executed by the processor 702, cause the apparatus 700 to be configured or operable to perform one or more operations of a method as described herein.

A network communication (comm.) interface 716 may also be connected to the bus 714. The network communication interface 716 may provide or support two-way data communication between the apparatus 700 and one or more external devices, e.g., the streaming system 600, optionally via a router/modem 726 and a wired or wireless connection 725. In the alternative, or in addition, the apparatus 700 may include a transceiver 718 connected to an antenna 729, through which the apparatus 700 may communicate wirelessly with a base station for a wireless communication system or with the router/modem 726. In the alternative, the apparatus 700 may communicate with a video streaming system 600 via a local area network, virtual private network, or other network. In another alternative, the apparatus 700 may be incorporated as a module or component of the system 600 and communicate with other components via the bus 714 or by some other modality.

The apparatus 700 may be connected (e.g., via the bus 714 and graphics processing unit 720) to a display unit 728. A display 728 may include any suitable configuration for displaying information to an operator of the apparatus 700. For example, a display 728 may include or utilize a liquid crystal display (LCD), touchscreen LCD (e.g., capacitive display), light emitting diode (LED) display, projector, or other display device to present information to a user of the apparatus 700 in a visual display.

One or more input devices 730 (e.g., an alphanumeric keyboard, microphone, keypad, remote controller, game controller, camera, or camera array) may be connected to the bus 714 via a user input port 722 to communicate information and commands to the apparatus 700. In selected embodiments, an input device 730 may provide or support control over the positioning of a cursor. Such a cursor control device, also called a pointing device, may be configured as a mouse, a trackball, a track pad, touch screen, cursor direction keys or other device for receiving or tracking physical movement and translating the movement into electrical signals indicating cursor movement. The cursor control device may be incorporated into the display unit 728, for example using a touch sensitive screen. A cursor control device may communicate direction information and command selections to the processor 702 and control cursor movement on the display 728. A cursor control device may have two or more degrees of freedom, for example allowing the device to specify cursor positions in a plane or three-dimensional space.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a," "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
segmenting, by a computing device, a frame of a video into a plurality of regions;
classifying, by the computing device, a region in the plurality of regions with a region type in a plurality of region types;
generating, by the computing device, film grain synthesis information for the region in the plurality of regions based on the region type that is associated with the region; and
outputting, by the computing device, the film grain synthesis information for adding film grain to the region of the frame.

2. The method of claim 1, wherein segmenting the frame comprises:
analyzing content in the frame to determine regions in the plurality of regions;
and / or
wherein segmenting the frame comprises:
analyzing decoding features for the frame to determine the region in the plurality of regions in the frame, wherein the decoding features are based on information related to decoding the frame,
wherein preferably the decoding features are based on the encoded bitstream or information from the decoding process of the frame.

3. The method of claim 1 or 2, wherein classifying the region in the frame comprises:
analyzing decoding features for the frame to determine a region type in the plurality of region types, wherein the decoding features are based on information related to decoding the frame,
wherein preferably the decoding features are based on an encoded bitstream for the frame or information from the decoding process of the frame.

4. The method according to any one of claims 1 to 3, wherein a region type in the plurality of region types is based on at least one of whether film grain is visible in the region, the region is of interest, and the region is prone to artifacts.

5. The method according to any one of claims 1 to 4, wherein generating the film grain synthesis information comprises:
selecting film grain parameters for a model based on the region type, wherein the film grain parameters are used to synthesize film grain using the model;
and / or
wherein generating the film grain synthesis information comprises:
synthesizing film grain based on the region type.

6. The method according to any one of claims 1 to 5, wherein generating the film grain synthesis information comprises:
determining whether the region is labeled with a first region type of film grain is visible;
determining whether the region is labeled with a second region type of prone to artifacts;
when the region is labeled with the first region type and the second region type, performing a first film grain synthesis process;
when the region is labeled with the first region type and not the second region type, performing the first film grain synthesis process when the region is labeled with a third label type of eye interest; and
when the region is labeled with the first region type and not the second region type, performing a second film grain synthesis process when the region is not labeled with the third label type of eye interest, wherein the second film grain synthesis process is different from the first film grain synthesis process.

7. The method of claim 6, wherein the first film grain synthesis process uses machine learning to generate the film grain synthesis information.

8. The method of claim 6 or 7, wherein the second film grain synthesis process generates the film grain synthesis information based on rules,
wherein preferably the rules use spatial information or temporal information that is associated with the region to generate the film grain synthesis information.

9. The method according to any one of claims 6 to 8, wherein generating the film grain synthesis information comprises:
when the region is not labeled with the first region type, determining whether the region is labeled with a third region type of eye interest;
when the region is labeled with the third region type and not the first region type, performing a third film grain synthesis process; and
when the region is not labeled with the third region type and not labeled with the first region type, performing a fourth film grain synthesis process, wherein the third film grain synthesis process is different from the fourth film grain synthesis process.

10. The method of claim 9, wherein the fourth film grain synthesis process does not generate film grain for the region.

11. The method of claim 9 or 10, wherein the third film grain synthesis process generates the film grain synthesis information based on a neighboring frame to the frame.

12. A non-transitory computer-readable storage medium having stored thereon computer executable instructions, which when executed by a computing device, cause the computing device to be operable for:
segmenting a frame of a video into a plurality of regions;
classifying a region in the plurality of regions with a region type in a plurality of region types;
generating film grain synthesis information for the region in the plurality of regions based on the region type that is associated with the region; and
outputting the film grain synthesis information for adding film grain to the region of the frame.

13. The non-transitory computer-readable storage medium of claim 12, wherein classifying the region in the frame comprises:
analyzing decoding features for the frame to determine a region type in the plurality of region types, wherein the decoding features are based on information related to decoding the frame.

14. The non-transitory computer-readable storage medium of claim 12 or 13, wherein generating the film grain synthesis information comprises:
selecting film grain parameters for a model based on the region type, wherein the film grain parameters are used to synthesize film grain using the model.

15. An apparatus comprising:
one or more computer processors; and
a computer-readable storage medium comprising instructions for controlling the one or more computer processors to be operable for:
segmenting a frame of a video into a plurality of regions;
classifying a region in the plurality of regions with a region type in a plurality of region types;
generating film grain synthesis information for the region in the plurality of regions based on the region type that is associated with the region; and
outputting the film grain synthesis information for adding film grain to the region of the frame.
